# EUROPÄISCHE PATENTANMELDUNG

(11) **EP 4 129 545 A1**
(43) Veröffentlichungstag der Anmeldung: **08.02.2023**
(21) Anmeldenummer: 22188383.8
(22) Anmeldetag: 02.08.2022
(51) Int. Cl.: B23C 3/32, B23G 1/34, B23G 5/18

(54) **WIRBELWERKZEUG**

(30) Priorität: 03.08.2021 EP 21189339
(71) Anmelder: HM Process Technology AG, 2540 Grenchen (CH)
(72) Erfinder: Flückiger, Hugo, 4552 Derendingen (CH)
(74) Vertreter: AMMANN PATENTANWÄLTE AG

(57) **Zusammenfassung**

Ein Wirbelwerkzeug (21), insbesondere für Anbringen eines Gewindes, umfasst einen Körper mit integral daran ausgebildeten Schneidzähnen (23; 47, 51). Ungenauigkeiten, die durch das Anbringen von Schneidezähnen am Werkzeug entstehen, werden so vermieden.

## Beschreibung

Die vorliegende Erfindung betrifft ein Wirbelwerkzeug gemäss Oberbegriff des Anspruchs 1. Des Weiteren betrifft sie ein Herstellungsverfahren des Wirbelwerkzeugs.

Das von Burgsmüller 1943 patentierte Gewindewirbeln ist nach Stand der Technik ein bekanntes Fertigungsverfahren:
W. Langsdorff, Gewindefertigung und Herstellung von Schnecken, Kapitel V: Wirbeln von Gewinden, in: Werkstattbücher für Betriebsfachleute Konstrukteure und Studenten, Springer-Verlag Berlin Heidelberg GmbH 1969, Herausgeber H. Determann, W. Malmberg, H. Rattay
Sonderdruck aus der technischen Rundschau Nr. 40/73 vom 14. Sept. 1973, F. Bertram

Das Gewindewirbeln, respektive Schälen wird zum Fertigen von Gewinden oder Konturen, die eine hohe Genauigkeit erfordern angewandt. Nach Stand der Technik laufen beim Gewindewirbeln mehrere, in einem Wirbelkopf aufgenommene Wendeplatten oder Werkzeuge auf einem Flugkreis exzentrisch um das Werkstück herum. Der Wirbelkopf ist bei der Gewindefertigung um den Gewindesteigungswinkel zum Werkstück geneigt. Zusätzlich rotiert das Werkstück im Gleichlauf zur Erzeugung der Gewindesteigung respektive Vorschub langsam in Längsrichtung um seine eigene Achse.

Es ist bekannt, dass das Erzielen von hohen Werkzeugstandzeiten und effizienten Spanleistungen wesentlich durch die Rundlaufgenauigkeit der Schneiden, d.h. durch die Koaxialität des gesamten Systems (Spindel, Werkzeugaufnahme, Werkzeugschneiden, gezielte Kühlung etc.) beeinflusst wird.

Es ist auch bekannt, dass es trennende Bearbeitungsverfahren gibt, die Werkzeuge mit integrierten, innenliegenden Schneidezähnen haben. So unter anderem auch die Gewindeherstellung mit Schneideisen. Ein Gewinde-Schneideisen ist zylinderförmig und weist innen, je nach Größe, drei oder mehr Schneiden auf. Am Außenmantel des Zylinders sind drei oder vier kegelförmige Vertiefungen vorhanden, in welchen das Schneideisen mittels Schrauben in einem passenden Halter gegen Verdrehen gesichert werden kann.

Werkzeuge mit integral innenliegenden Schneidezähnen sind auch in den folgenden Patentschriften beschrieben:
- US 2006/0225549 A1 vom Oktober 12. 2006: Sägen mit einem Kreissägeblatt mit innenliegenden Zähnen,
- GB 115357 A vom 30. August 1917: Verbesserungen für das Gewindeschneiden oder Gewindefräsen

Alle diese genannten Werkzeuge haben nebst den innenliegenden Schneidzähnen keinen integralen Form- und Kraftschluss im Werkzeug selbst.

Sämtliche nach Stand der Technik bekannten Lösungen sind nicht adapterfrei. Sie brauchen zur Verbindung mit dem Antrieb Schrauben, Stifte, Wendeplattenträger etc.

Das Gewindewirbeln respektive Schälen ist nicht vergleichbar mit dem Sägen mit einem Kreissägeblatt mit innenliegenden Zähnen (s. z.B. US 2006/0225549 A1).

Der Unterschied besteht im Bewegungsablauf. Das Kreissägeblatt mit innenliegenden Zähnen bewegt sich exzentrisch um das gespannte Profil herum. Das Wirbelwerkzeug dreht sich wie eingangs beschrieben ebenfalls exzentrisch um das Werkstück. Zusätzlich dreht sich das Werkstück jedoch auch noch um die eigene Achse und mit Vorschub in Längsrichtung zur Erzeugung der Gewindesteigung.

Ausserdem haben die Schneidzähne beim Wirbeln mehrere nachfolgende Funktionen zu erfüllen:
- Tiefenschneiden
- Profilschneiden der beiden Flanken
- Entgraten der Profilspitze
- Gewährleistung einer hohen Geometriegenauigkeit und Oberflächengüte
- Parallelisierung von Schruppkonturen, zum Beispiel für die Kopfgeometrie der Schrauben

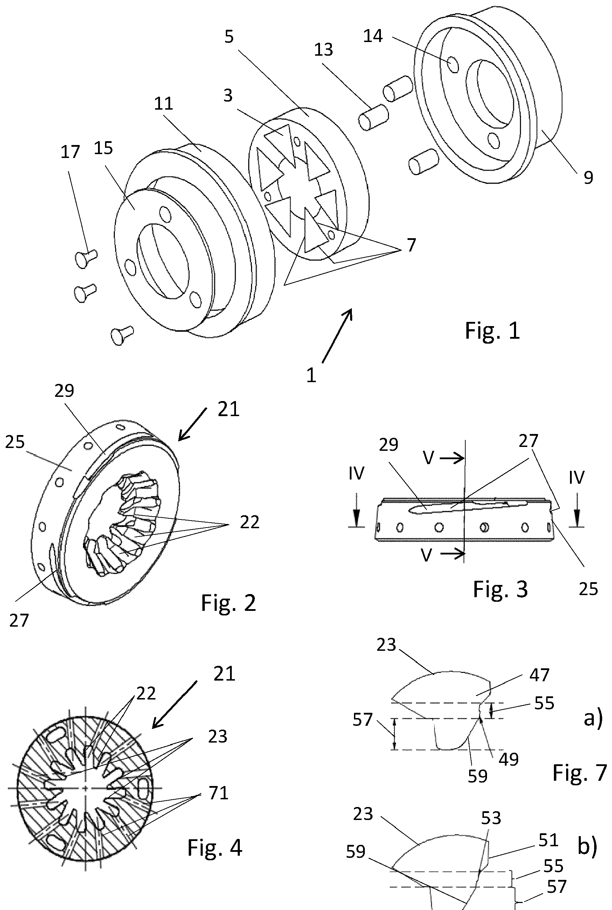

Fig. 1 zeigt schematisch ein Wirbelwerkzeug (1) nach dem Stand der Technik. Es besteht aus mehreren Teilen:
a) Je nach Situation mindestens 6 einzelne Wendeschneidplatten (3), jeweils verschraubt mit einem Schneidplattenträger (5) und mit drei Anlageflächen (7);
b) dem Schneidplattenträger (5); und
c) einer Grundaufnahme (9) bzw. einem Wirbelkopf.
d) Gefügt und zentriert wird diese Grundaufnahme (9) bzw. dieser Wirbelkopf in der Hohlwellenspindel (nicht dargestellt) der Werkzeugmaschine, entweder mit einem konischen Gewinde und einer Plananlage oder mit einer Kegel-Plananlage mit zylindrischem Bund und Spannschrauben. Mitnehmerstifte (13), die in entsprechenden Löchern (14) in Grundaufnahme (9) und Schneidplattenträger (5) stecken, übertragen die Drehbewegung von der Grundaufnahme (9) auf den Schneidplattenträger (5). Ein Deckelring (15) ist mittels Schrauben (17) am Schneidplattenträger (5) befestigt, wodurch die Überwurfmutter (11) gegen Lösen gesichert wird.

In einer weiteren bekannten Ausführung wird der Schneidenträger (5), gestaltet in Kegel-Plananlage mit zylindrischem Bund, in dem die Schneidplatten (3) befestigt sind, form- und kraftschlüssig mit Schrauben in die Wirbelwelle eingesetzt.

Alle Wirbelwerkzeuge haben demzufolge mindestens 4 Fügestellen:
1. Wendeschneidplatte - Schneidplattenträger,
2. Schneidplattenträger - Wirbelkopf,
3. Wirbelkopf - Hohlwellenspindel,
4. Hohlwellenspindel - Spindellagerung.

Diese Mehrzahl von Fügestellen erschwert die Einhaltung von einem hochpräzisen Rundlauf- und einer hohen Wechselgenauigkeit. Ziel wäre eine Rundlauf- und Wechselgenauigkeit mit minimalen Abweichungen. Erwünscht sind Rundlaufabweichung von höchstens 0.003 mm (3 Mikrometer) und eine Wechselgenauigkeit von höchstens 0.002 Millimeter (2 Mikron). Insbesondere stellt sich diese Problematik beim Gewindewirbeln von Knochenschrauben. Im Gegensatz zum Drehverfahren entsteht beim Gewindewirbeln kein rundes Profil, sondern ein Profil mit vielen Ecken. Beeinflusst wird die Erhöhung der Ecken im Wesentlichen durch die genannten Geometrieabweichungen. Bei Knochenschrauben oder auch Spindeln sind perfekte Geometrien und eine hohe Oberflächengüte ohne sichtbare Vieleckfacetten gefordert.

Die Wendeschneidplatten (3) werden mit Schleifmaschinen oder mit kombinierten Laser-Schleifmaschinen in mehreren Aufspannungen hergestellt. Die Fertigung der Schneideplattenträger und Wirbelköpfe wird nach dem Stand der Technik mit trennenden Bearbeitungsverfahren (Drehen, Fräsen, Schleifen etc.) realisiert.

Ausgehend vom derzeitigen Stand der Technik wird beim Wirbeln nach wie vor ein Kühlmedium zur Kühlung während des Prozesses genutzt. Für die Zuführung des Fluids zu den Schneidplatten sei hier auf die Gebrauchsmusterschrift DE 20 2017 107 633 U1 hingewiesen. Das Kühlmedium kann bei diesem System nicht direkt radial über den Spindelantrieb zur Spanstelle geleitet werden. Für die Zuführung zur Spanstelle müssen axiale, radiale und schräge Kanäle im Spindelrotor und im Wirbelwerkzeug (Werkzeughalter, Kassette oder Ringkassette) gebohrt werden. Hinzu kommt, dass das Kühlmedium im Schneidplattenträger infolge der verbauten Platzverhältnisse (Schrauben/Platten) nicht gezielt zu den Wendeplatten geleitet werden kann. Problematisch sind ferner die engen und nicht nach hinten geöffneten Spanräume zwischen den Schneidplatten.

Diese Schwierigkeiten machen eine trockenbearbeitungsgerechte und frei zugänglich gestaltete Spanstelle unmöglich. Es bleiben zwangsläufig Späne liegen.

Oft stellt sich auch die Aufgabe, den Rohmaterialdurchmesser eines Werkstücks mit einem Vorschnitt auf einen bestimmten Durchmesser zu reduzieren, bevor der Enddurchmesser oder das Gewinde bearbeitet werden kann. Dieser Vorschnitt verlängert die Gesamtbearbeitungszeit, weil nur ein Teil der Schneiden des Wirbelwerkzeugs dafür genutzt wird.

Eine Aufgabe der vorliegenden Erfindung besteht darin, ein Wirbelwerkzeug anzugeben, das einfacher mit der geforderten Genauigkeit an einer Werkzeugmaschine angebracht werden kann.

Eine andere Aufgabe besteht darin, ein Verfahren zur Herstellung eines solchen Werkzeugs mit verbesserter Geometriegenauigkeit (Rundlauf und Koaxialität) anzugeben.

Weitere, optional zu lösende Aufgaben sind:
- Bessere Vereinigung insbesondere der finalen Endkonturen und Durchmesser mit einer vorangehenden Durchmesserreduktion.
- Einen automatischen Werkzeugwechsel zu ermöglichen.
- Verbesserte Abfuhr der Späne.
- Verbesserte Versorgung mit Kühlmedium.
- Vergrösserung des Steigungswinkels der herzustellenden Gewinde oder Spiralen.
- Verbesserte Nutzung des Werkzeuges mit gleichbleibender Qualität-Gewährleistung der Schneidkanten Nachbearbeitung

Ein solches Werkzeug ist im Anspruch 1 angeben. Die weiteren Ansprüche geben bevorzugte Ausführungen und Verfahren zur Herstellung des Wirbelwerkzeugs an.

Die Erfindung wird weiter an bevorzugten Ausführungsbeispielen unter Bezugnahme auf Figuren erläutert:
- Fig. 1: Schematische Explosionsdarstellung eines Wirbelwerkzeugs gemäss Stand der Technik wie eingangs erläutert;
- Fig. 2: isometrische Darstellung eines Wirbelwerkzeugs;
- Fig. 3: Seitenansicht des Wirbelwerkzeugs gemäss Fig. 2
- Fig. 4: Schnitt gemäss IV-IV in Fig. 3;
- Fig. 4: Draufsicht auf das Wirbelwerkzeug;

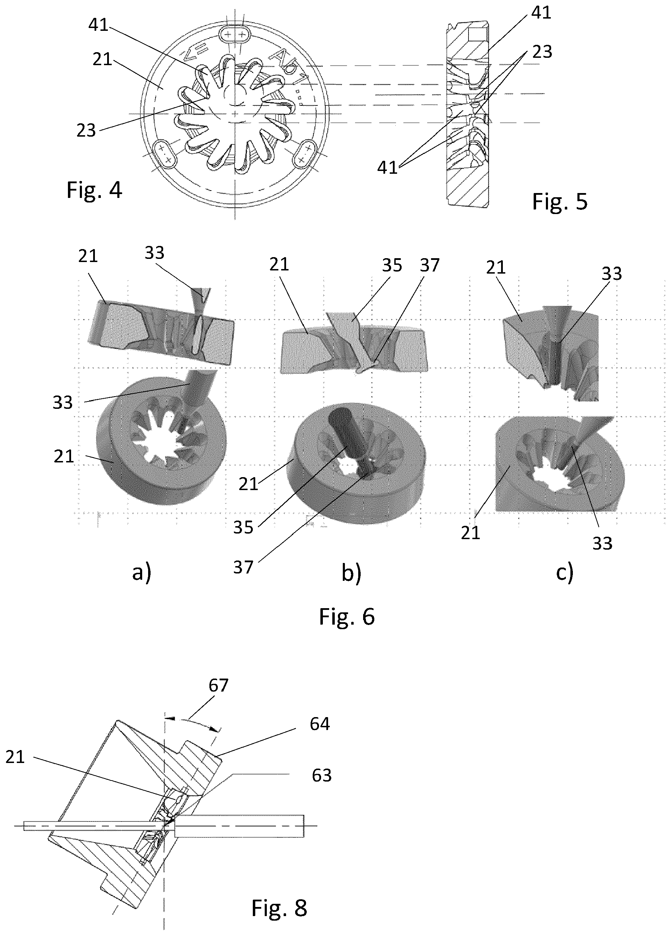

- Fig. 5: Schnitt gemäss V-V in Fig. 3;
- Fig. 6: Herstellen der Schneidzähne des Wirbelwerkzeug;
- Fig. 7: Schneidezähne mit axial und radial verteilten Schneidengeometrien;
- Fig. 8: Illustration Schwenkachse

Die Erfinder haben einen Weg gefunden, das Wirbelwerkzeug als einteiliges Wirbelwerkzeug (21) auszuführen. Der einteiligen Ausführung liegt die Idee zugrunde, mit direkter Aufnahme und Positionierung des einteiligen Wirbelwerkzeuges in der Antriebswelle die Summentoleranzfehler zu eliminieren oder wenigstens deutlich zu verringern.

Das einteilige Wirbelwerkzeug (21) enthält eine Vielzahl von innenliegenden Schneidezähnen (23) und an der Aussengeometrie einen kegeligen Zentrier- und Schnittstellenmechanismus (25) mit Dreipunktanlage (27) zur direkten manuellen oder automatischen Befestigung des Werkzeuges in der Werkzeugspindel.

Der Form- und Kraftschluss des einteiligen Wirbelwerkzeugs (21) mit der Antriebsspindel einer Werkzeug- oder Bearbeitungsmaschine wird durch eine Art konischen Verschluss 29 mit einer Dreh-Arretierung von ca. 25° bis 60° und mit einer 3 gängigen gewindeartigen Verriegelungsnute (ähnlich einem Bajonettverschluss) in einem Steigungswinkel von circa 6 mm /360 Grad realisiert Mit dieser Anordnung der schräglaufenden Nutsegmente in der Antriebsspindel wird die Passung Wirbelwerkzeug (21)/Antriebsspindel zugleich radial und axial gedichtet.

Nach dem Stand der Technik gibt es keine Wirbelwerkzeuge respektive Wirbelsysteme, welche die Funktionen von einem automatisch wechselbaren Wirbelwerkzeug mit direkter Kupplung der Kühlmedien erfüllen können. Gemäss einem bevorzugten Aspekt bietet das beschriebene Werkzeug für das Wirbeln und Schälen eine integrale Lösung, welche die Schneidezähne sowie den präzisen Form- und Kraftschluss in einem Monoblock enthält. Somit wird das Ziel einer präzisen Wiederholgenauigkeit der Koaxialität bei einem manuellen, wie auch bei automatischem Werkzeugwechsel erreicht.

Eine erzielbare Verbesserung der Technik besteht aus der Verknüpfung der Werkzeug-Spannung mit einem Dreipunktkraftschluss, der Zentrierung mit einem Konus und der Schneiden in einem einzigen Werkzeug.

Der automatische Wechsel des einteiligen Wirbelwerkzeugs kann je nach Werkzeugmaschinentyp mit einem Pick-up-Wechsler realisiert werden. Dabei wird das einteilige Wirbelwerkzeug in Richtung der Spindel-C-Achse und des Zustellhubs im Werkzeugmagazin abgelegt bzw. aus ihm aufgenommen. Über die konische Schnittstelle und 3 Verriegelungsnuten ist das Wirbelwerkzeug radial und axial spielfrei positioniert. Die Konus-Schnittstelle mit 3 gewindeartigen Verriegelungsnuten überbrückt kleine Fertigungs- und Verschleisstoleranzen. Mit der Spindel als C-Achse wird das Wirbelwerkzeug mit definiertem Anzugsmoment fixiert. Der Zustellhub als Z-Achse ist vorzugsweise pneumatisch und nachgiebig für die erleichterte Einschraubbewegung und Positionierung. Im Werkzeugmagazin sind die Wirbelwerkzeuge verdrehgesichert und axial über Permanentmagnete gehalten. Zum Lösen der Schnittstelle wird ein hohes, schlagartiges Drehmoment an der Spindel benötigt. Manuelle Montage und Demontage mit einem Drehmomentschlüssel ist ebenso möglich.

Das einteilige Wirbelwerkzeug kann bei entsprechender Maschinenkonfiguration auch für mittlere und feinere Schäl-Bearbeitungen zur Durchmesserreduktion von Knochennägeln, Wellen, Achsen etc. mit unterschiedlichen Geometrien genutzt werden. Mit abgestimmten geometrischen Ausführungen der Schneidzähne kann eine optimale Zerspanungsarbeit und ein optimales Zeitspanvolumen mit Spanbruch erzielt werden.

Beim einteiligen Wirbelwerkzeug, im Allgemeinen bestehend aus Hartmetall, können auch Schneidezähne alternativ aus PKD, CVD und/oder CBN in das Werkzeug eingelötet werden. In diesem Fall muss die erforderliche Schneidengeometrie mit Ultrakurzpulslaser präzise bearbeitet werden. Somit können auch hochharte Werkstoffe wie Keramik bearbeitet werden.

Ferner kann im Bedarfsfall zur Steigerung der Verschleissfestigkeit das Werkzeug mit einem der Bearbeitungsaufgabe angepassten Layer beschichtet werden. Neue Hartmetall-Bearbeitungsmöglichkeiten mit vielzahnigen PKD/CVD und CBN Werkzeugen (polykristalliner Diamant, Diamant mit hohem Reinheitsgrad oder kubisches Bornitrid) und Laser-konditionierten Schneidezähnen machen es möglich, wie in Fig. 5 dargestellt das einteilige Werkzeug inklusive der Schneiden, der Spannuten und der Aussengeometrie der Schnittstelle in einem Stück herzustellen. Bevorzugt wird ein Rohling für das Wirbelwerkzeug also mit derartigen Werkzeugen durch Fräsen bearbeitet, um die Schneidzähne und Schneiden zu erhalten.

Fig. 5a illustriert die Herstellung des Spanwinkels der Schneide mittels eines zylindrischen Fräsers (33). Der Freiwinkel wird mittels eines Fräswerkzeugs (35) mit Hinterschnitt (37) hergestellt (Fig. 5b).

Der Vorteil liegt darin, dass die Spangeometrie der Schneidezähne, wie auch die Aussengeometrie, im Kreuz der A- und B- Achse (ohne Nutzung der X- und Y-Achse und deren Positions- und Schleppfehler) mit einer präzisen 5-Achsen-CNC-Maschine hergestellt werden können. Alle diese sich durch das einteilige Wirbelwerkzeug ergebenden Vorzüge bringen eine verbesserte Qualität bezüglich Deckungsgleichheit der Werkzeug- und Spindelachse und Rundlauf der Schneidezähne.

Erkennbar positiv an der Lösung des einteiligen Wirbelwerkzeugs ist, dass der Abfluss der Späne im Gegensatz zu den Wirbeleinheiten nach dem Stand der Technik nicht durch enge Spankammern und Fangstellen, zusätzliche Aufnahmeringe, Schraubstellen der Wendeplatten und Zwischenflansche behindert wird.

Durch die nach hinten radial und axial geöffnete Ausbildung der Spanräume (41) wird eine Ventilatorwirkung für einen optimalen Abfluss der Späne erzeugt, was eine trockene Bearbeitung begünstigt.

Die Erfindung gewährleistet ein günstiges Verhältnis von Anzahl Schneidezähne, Spannuten und Wirbelkreis. Nach dem Stand der Technik bieten bestehende Systeme im Vergleich zum einteiligen Wirbelwerkzeug keine optimale Varianz zwischen Anzahl Schneidezähne, Spankammern und Wirbelkreis mit blockierungsfreiem Abgang der Späne.

Beim einteiligen Werkzeug kann eine engere Teilung der Schneidezähne, d.h. mehr Schneidezähne pro Werkzeug, gewählt werden. Die engere Teilung der Schneidezähne und die nach hinten geöffneten Spannuten (41) (s. Figg. 5 und 6) ergeben bessere Hüllkreisschnitte und dadurch eine höhere Produktivität.

Nach dem heutigen Stand der Technik wird bei mehrschneidigen Wirbelwerkzeugen die Zerspanungsarbeit mit Schnittaufteilung durchgeführt. Einzelne Schneiden arbeiten als Vorschneider und die Schlichtschneiden erzeugen die fertigen Gewindeflanken, z.B. 9-schneidiges Wirbelwerkzeug mit drei Vorbearbeitungsschneiden zur Durchmesserreduktion und sechs Schneiden für das Gewindeprofil.

Beim einteiligen Wirbelwerkzeug besteht nach Bedarf die Möglichkeit, die Schnittaufteilung auf zwei Schneidkanten pro Schneidezahn zu legen. Ebenso ist es möglich, durch Schnittaufteilung der Schneidkanten pro Zahn mit entsprechender Gewindeprofilverzerrungskorrektur 3-gängige Gewinde zu wirbeln

Bei Nutzung des einteiligen Wirbelwerkzeugs (21) für das Gewindewirbeln kann die Schnittaufteilung daher mit seitlich verteilten Zahnfreistellungen gemacht werden. In Abweichung zum Stand der Technik kann die Spitzengeometrie aller Werkzeugschneiden für die Fertigung des Gewindekernprofils genutzt werden. Auf diese Weise wird ein besseres Zeitspanvolumen erreicht. Mit diesem Konzept kann also sowohl die axiale als auch die radiale Schnittkraft auf eine größere Anzahl von Schneiden verteilt werden. Die Schneiden für den Vorschnitt zur Durchmessereduzierung der Rohmaterial Durchmesser müssen zusätzlich aufgeteilt werden, so dass z.B. nur jede zweite Schneide im Eingriff ist. Der axiale Vorschub abhängig von der gewählten Steigung ist nur gering, der axiale Zahnvorschub wäre nur minimal.

Fig. 7 zeigt zwei Zähne (23), wobei (Fig. 7a) ein Zahn (47) einen ersten inneren Teilvorschneidebereich (49) und (Fig. 7b) der andere Zahn (51) einen weiter aussen liegenden Teilvorschneidebereich (53) aufweist. Die Teilvorschneidebereiche (49) und 53 bilden zusammen den Vorschneidebereich (55). Der eigentliche Gewindeschneidebereich (57) wird durch die beiden Zähne gebildet, die das Gewindeprofil (59) identisch abdecken.

Eine bekannte Lösung zum Durchführen einer Durchmesser-Reduktion besteht darin, vor dem Wirbelwerkzeug ein Drehwerkzeug anzuordnen, so dass letzteres den Vorschnitt durchführen kann. Das Wirbelwerkzeug erzeugt danach nur noch das Gewinde. Das Vorgehen ist als Drehwirbeln bekannt.

Nachteilig hieran ist jedoch, dass die Bewegung des Wirbelwerkzeugs mit der Bewegung der Hauptspindel, die für das Schneiden mit dem Drehwerkzeug nötig ist, synchronisiert werden muss, was derzeit nur von einigen Werkzeugmaschinenherstellern unterstützt wird. Das Drehwerkzeug muss kontinuierlich schneiden, was die bekannten Probleme bereitet wie hohe thermische Belastung der Schneide und schwierige Spankontrolle. Titan und seine Legierungen sind langspanende Werkstoffe, ebenso die in der Medizinaltechnik üblichen rostfreien Stahllegierungen, ein kontrollierter Spanbruch beim Drehen wird in der Regel nicht erreicht. Insgesamt hat diese Verfahrensintegration Drehen und Wirbeln zusammen im Weiteren zur Folge, dass diese Art der Bearbeitung nur mit einer geringeren Anzahl von Schneiden im Wirbelwerkzeug machbar ist.

Im Vergleich zum Drehwirbeln sind die Zeitersparnisse mit dem beschriebenen einteiligen Wirbelwerkzeug mit Vorschnittbereichen zur Durchmesserreduktion weitaus besser. Das einteilige Wirbelwerkzeug erzeugt vorteilhafterweise kurze Späne. Die kombinierte Schneiden-Geometrie verhindert Interferenzen von Spänen, welche beim Drehwirbeln nicht auszuschließen sind.

Bei der Herstellung von Gewinden oder Schnecken etc. muss der mittlere Steigungswinkel mit entsprechendem Einschwenken der Wirbeleinheit oder mit Verzerrungskompensation der Schneiden-Geometrie berücksichtigt werden. Für eine erleichterte ganzzahlige Einstellung des Schwenkwinkels kann die Abweichung mit einer verzerrten Schneiden-Geometrie kompensiert werden.

Der einstellbare Schwenkwinkel hat bei den bekannten Wirbeleinheiten durch den Achsenversatz des Drehpunktes zur Spaneingriffsstelle hin begrenzte Einstellmöglichkeiten.

Eine Anordnung des einteiligen Wirbelwerkzeugs (21) mit seinem Form- und Kraftschluss (63) im Drehpunkt der Antriebsspindel (64) erweitert die Bandbreite des einstellbaren Schwenkwinkels (67). Für die Bearbeitung von Spiralnuten, Gewinden, Schnecken etc. mit grossen Steigungen ist dies ein Vorteil.

Wie in Fig. 4 zu sehen, kann die Zuführung des Kühlmediums beim einteiligen Werkzeug (21) mit einer einfacheren, direkten radialen Zuführung durch radiale Kühlkanäle (71) ohne Umleitung gestaltet werden.

Die Zufuhr erfolgt radial von aussen. Im Übergang zum drehenden Teil ist wenigstens auf einer Seite (stationärem bzw. beweglichem Teil) eine Ringnut vorhanden, die das Medium über den Umfang verteilt, so dass die Kühlkanäle (71) dauernd mit Medium versorgt werden.

Vorteilhaft am Design des einteiligen Werkzeuges (21) ist ferner die nach hinten radial und axial geöffnete Ausbildung der Spanräume (Spannuten 41). Dies bewirkt einen Absaugeffekt und damit den optimalen Abfluss der Späne sowohl im trockenen wie auch im nassen Zustand.

Die Wirkung dieses Luftstromes kann auch für eine trockene Bearbeitung genutzt werden. Die geringe Dicke des einteiligen Wirbelwerkzeuges ermöglicht einen direkt gekühlten Luftstrom mit geschlossener Zuleitung und geschlossener Wegleitung der Späne der Spanstelle.

Da das Nachschleifen der vorbekannten montierten Werkzeugkombination aus Dreieck- oder Rombusplatten - Plattenträger - Hohlspindel etc. aus technischen Gründen wegen den entstehenden Ungenauigkeiten und der Komplexität nur schwierig machbar ist, wird eine Ressourcenschonung der Wendeplatten durch Wiederverwendung vielfach nicht angewendet.

Die identische Aufnahme für das einteilige Wirbelwerkzeug der Vorrichtung für das Nachschärfen mit Form und Kraftschluss wie die Spindel gestattet ein exaktes 2-3-maliges Nachschärfen in einer Genauigkeit wie im Neuzustand.

Mit einer integralen Kodifizierungs-Kennzeichnung des einteiligen Wirbelwerkzeuges können auch alle relevanten geometrischen Daten nach dem Nachschärfen von der Maschine gelesen und somit direkt mit dem Werkzeugoffset verrechnet werden

Aus der vorangehenden Beschreibung sind dem Fachmann Abwandlungen und Ergänzungen der Erfindung zugänglich, ohne den Schutzbereich der Erfindung zu verlassen, der durch die Ansprüche definiert ist. Denkbar ist beispielsweise:
- Eine Anbindung an interne oder externe Werkzeugdatenbanken.

## Patentansprüche

1. Wirbelwerkzeug (21) zur Verwendung in einer Werkzeugmaschine mit einem Trägerabschnitt und einer Mehrzahl an Schneidkanten (23), **dadurch gekennzeichnet, dass** die Schneidkanten und der Trägerabschnitt integrale Teile des Wirbelwerkzeugs sind und der Trägerabschnitt die Schneidkanten ringförmig umgibt.

2. Wirbelwerkzeug (21) gemäss Anspruch 1, **dadurch gekennzeichnet, dass** es ausgelegt ist, ein Aussengewinde an einem kreiszylindrischen Abschnitt eines Werkstücks herzustellen, bevorzugt einem Abschnitt mit einem Durchmesser von höchstens 0,2 m, höchstens 0,01 m, höchstens 0,005 m, höchstens 0,0035 m oder höchstens 0,001 m mit steigender Bevorzugung.

3. Wirbelwerkzeug (21) gemäss einem der Ansprüche 1 bis 2, **dadurch gekennzeichnet, dass** der Trägerabschnitt peripher konisch (25) ausgebildet ist, so dass das Wirbelwerkzeug zentriert in einer Aufnahme einer Werkzeugmaschine haltbar ist.

4. Wirbelwerkzeug (21) gemäss einem der Ansprüche 1 bis 3, **dadurch gekennzeichnet, dass** der Trägerabschnitt am Aussenumfang mindestens eine gewindeartige Verriegelungsnut (29) aufweist, so dass das Wirbelwerkzeug in einer Aufnahme einer Werkzeugmaschine, die mit Gegenstücken zu den gewindeartigen Verriegelungsnuten ausgestattet ist, durch Einschrauben befestigbar ist.

5. Wirbelwerkzeug (21) gemäss Anspruch 4, **dadurch gekennzeichnet, dass** drei gewindeartige Verriegelungsnuten (29) vorhanden sind.

6. Wirbelwerkzeug (21) gemäss einem der Ansprüche 4 bis 5, **dadurch gekennzeichnet, dass** bei mehr als einer gewindeartigen Verriegelungsnut (29) die gewindeartigen Verriegelungsnuten nicht überlappen, bevorzugt jeweils höchstens einen Winkel von 75 % von 360° geteilt durch die Anzahl gewindeartiger Verriegelungsnuten einnehmen.

7. Wirbelwerkzeug (21) gemäss einem der Ansprüche 4 bis 6, **dadurch gekennzeichnet, dass** die Steigung der gewindeartigen Verriegelungsnuten identisch ist und pro volle Umdrehung (360°) höchstens 10 mm, bevorzugt höchstens 8 mm und weiter bevorzugt etwa 6 mm ist.

8. Wirbelwerkzeug (21) gemäss einem der Ansprüche 1 bis 6, **dadurch gekennzeichnet, dass** es Kanäle (71) mit Mündungen nahe den Schneidkanten (23) aufweist, so dass diese über die Kanäle mit einem Betriebsmittel, insbesondere einem Schmier- oder Kühlmittel, versorgbar sind.

9. Wirbelwerkzeug (21) gemäss einem der Ansprüche 1 bis 8, **dadurch gekennzeichnet, dass** jede Schneidkante (23) an einem Schneidzahn ausgebildet ist, wobei wenigstens ein erster Schneidkantenbereich (55; 49, 53) von je zwei Zähnen (47, 51) unterschiedlich, aber korrespondierend ausgebildet ist, so dass die ersten Schneidkantenbereiche ( 49, 53) zusammen ein Äquivalent einer Schneidkante mit einer Länge grösser als einer der ersten Schneidkantenbereiche und höchstens gleich der Summe von zwei korrespondierenden ersten Schneidkantenbereichen bilden.

10. Wirbelwerkzeug (21) gemäss einem der Ansprüche 1 bis 9, **dadurch gekennzeichnet, dass** die Schneidkanten (23) an Schneidzähnen ( 47, 51) ausbildet sind, wobei jeder Schneidzahn mindestens zwei Schneidkanten (49, 53; 59), bevorzugt genau zwei Schneidkanten, aufweist, so dass zwei aufeinanderfolgende Schneidprozesse ausführbar sind, bevorzugt ein erster Schneidprozess zum Reduzieren eines Aussenmasses eines Werkstücks und ein nachfolgender zweiter zum Ausbilden eines Gewindes.

11. Verfahren zum Herstellen eines Wirbelwerkzeugs (21) gemäss einem der Ansprüche 1 bis 10, **dadurch gekennzeichnet, dass** Schneidzähne (23; 47, 51) mit den Schneidkanten in der Wand eines Innenlochs eines im wesentlichen scheibenförmigen Werkstück durch Einsatz eines spanabhebenden Werkzeugs (33, 35) ausgebildet werden.

12. Verfahren gemäss Anspruch 11, **dadurch gekennzeichnet, dass** das Werkstück in einer Werkzeugmaschine relativ zur Werkzeugmaschine bezüglich der Hauptlinearachsen (X- und Y-Achse) unbeweglich eingespannt ist und nur durch Drehen und Neigen relativ zu den spanabhebenden Werkzeugen (33, 35), bevorzugt Fräswerkzeugen, und die spanabhebenden Werkzeuge in ihrer Längsrichtung (Z-Achse) bewegt werden, so dass die gegenüber den benutzten Bewegungsachsen höhere Toleranz der Hauptlinearachsen keine Auswirkung hat.
